Europäisches Patentamt

**European Patent Office**

Office européen des brevets

(19)

(11) Numéro de publication: **0 006 865**
**B1**

(12)

# FASCICULE DE BREVET EUROPEEN

(45) Date de publication du fascicule du brevet: 05.05.82

(51) Int. Cl.³: **B 01 D 59/00,**
**C 01 G 43/00**

(21) Numéro de dépôt: 78900033.8

(22) Date de dépôt: 30.06.78

(86) Numéro de dépôt international:
PCT/EP78/00003

(87) Numéro de publication internationale:
WO 79/00025 25.01.79 Gazette 79/2

(54) Procédé pour la séparation des isotopes d'un métal lourd.

(30) Priorité: 04.07.77 FR 7720491

(43) Date de publication de la demande:
23.01.80 Bulletin 80/2

(45) Mention de la délivrance du brevet:
05.05.82 Bulletin 82/18

(84) Etats contractants désignés:
CH DE GB LU SE

(56) Documents cités:

(73) Titulaire: PELTIER, Raymond
11 square Jasmin
F-75016 Paris (FR)

(72) Inventeur: PELTIER, Raymond
11 square Jasmin
F-75016 Paris (FR)

(74) Mandataire: Schmitz, Jean-Marie et al,
Office Dennemeyer S.à.r.l. 21-25 Allée Scheffer
P.O. Box 41
Luxembourg (LU)

Courier Press, Leamington Spa, England.

## Procédé pour la séparation des isotopes d'un métal lourd

La présente invention concerne un procédé pour la séparation des isotopes d'un métal lourd.

On connaît actuellement deux procédés utilisés pour une telle séparation, fondés sur la différence de masse entre les molécules d'un même composé chimique de plusieurs isotopes d'un même corps, la centrifugation, et la diffusion gazeuse. Le procédé le plus utilisé, la diffusion gazeuse, nécessite des équipements complexes. De plus, lorsqu'il est utilisé pour la séparation des isotopes 235 et 238 de l'uranium, il est mis en oeuvre à partir de tétrafluorure d'uranium, corps extrêmement actif du point de vue chimique et donc difficile à manipuler.

Dans le brevet US 3 058 811 est décrit un procédé d'enrichissement en $D_2O$ dans des solutions de $D_2O$ dans $H_2O$, en utilisant un composé tensio-actif. Ce procédé est basé sur la propriété des composés tensio-actifs de se solvater en absorbant des molécules d'eau au voisinage de leur pôle hydrophile. Comme ce pouvoir de solvatation varie avec la température, et que cette variation est légèrement différente avec les molécules de $D_2O$, par rapport aux molécules de $H_2O$ une certaine séparation du deutérium est possible. Etant donné le principe de ce procédé, celui-ci est limité à la séparation du deutérium de l'hydrogène et il ne s'applique pas aux métaux lourds.

La présente invention vise à pallier ces inconvénients. A cet effet, le procédé qu'elle concerne comprend la formation d'un composé tensio-actif dudit métal, la dissolution de ce composé dans un liquide à forte tension superficielle, l'injection d'un corps non miscible dans cette solution pour former une pluralité de surfaces de séparation, et la récupération de la fraction de la solution voisine desdites surfaces de séparation.

On sait en effet que la force tensio-active qui attire les molécules d'un corps tensio-actif dissout dans un liquide vers une surface de séparation formée dans ce liquide, est similaire à la tension capillaire. Cette force est due à l'action des molécules environnantes, ici les molécules du liquide à forte tension superficielle, sur la molécule considérée, action qui s'exerce par des forces d'attraction ou de répulsion à courte distance. Cette action, qui est nécessairement équilibrée en pleine masse de la solution et a donc une résultante nulle, est déséquilibrée u voisinage des surfaces de séparation, du fait précisément qu'il y a, au-delà de cette surface de séparation, des molécules différentes, et donc des forces d'attraction ou de répulsion différentes. Cette action a donc, au voisinage de la surface de séparation, une résultante non nulle. Par des raisons de symétrie, elle est d'ailleurs normale à cette surface.

Cette action s'exerce aussi bien sur les molécules du liquide que sur les molécules du composé tensio-actif, mais elle est plus forte sur les molécules du composé tensio-actif que sur les molécules du liquide, aussi les premières tendent-elles à prendre la place des secondes sur les surfaces de séparation. On démontre d'ailleurs que l'énergie capillaire du système est égale au produit de l'aire de la surface de séparation par la tension superficielle des molécules qui la tapissent. Cette énergie tend à être minimum, ce qui explique d'une part que le corps non miscible, lorsqu'il s'agit d'un fluide, se présente sous la forme de gouttes ou de bulles de forme sphérique afin de minimiser la surface, et d'autre part que les molécules du composé tensio-actif tendent à prendre la place des molécules du liquide à forte tension superficielle.

Tout se passe donc comme si les molécules du composé tensio-actif étaient attirées par la surface de séparation. Cette force d'attraction est la même pour toutes les molécules du composé, quel que soit l'isotope du métal lourd ayant servi à le former, car il s'agit là d'une force d'origine chimique, Cette force d'attraction est inversement proportionnelle à une puissance $n$ de la distance à la surface de séparation. Dans une première approximation, on peut admettre que $n$ est égal à 2.

Toutes les molécules du composé tensio-actif sont donc attirées vers la surface de séparation par une force identique qui n'est fonction que de la distance, mais ces molécules n'ont pas toutes la même masse, car celles qui contiennent l'isotope le plus léger du métal lourd dont on veut réaliser la séparation isotopique sont de toute évidence plus légères que les molécules contenant l'isotope le plus lourd. On comprend donc que les molécules contenant l'isotope le plus léger ont une accélération plus grande que les molécules contenant l'isotope le plus lourd, ayant moins d'inertie que ces dernières. Elles sont donc plus rapides et arrivent les premières à la surface de séparation. Cette surface de séparation est donc plus riche que la solution initiale en isotope le plus léger.

De préférence, on insuffle un gaz dans la solution pour y produire des bulles et former ainsi les surfaces de séparation.

Ainsi les molécules du composé tensio-actif tendent à venir se placer à la surface des bulles, normalement à celle-ci, et la migration ne cesse que lorsque toute la surface des bulles est tapissée d'une couche monomoléculaire du composé tensio-actif. Mais le corps non miscible peut également être un autre fluide, ou même un solide pulvérulent à grande surface spécifique, tel que du sable fin.

Dans une forme de réalisation préférée de l'invention, le composé tensio-actif est un savon et les bulles sont recueillies à la surface libre de la solution sous forme de mousse.

En effet, lorsque la bulle de gaz, qui du fait de sa légèreté remonte dans ledit liquide à forte tension superficielle, arrive en surface, elle conserve sa pseudomembrane du composé tensioactif et prend alors la forme bien connue d'une bulle de savon formant ainsi une mousse. La membrane qui enveloppe chaque bulle est constituée par des molécules du liquide, et surtout par des molécules de savon.

Dans la pratique, la fraction de la solution récupérée est à nouveau dissoute dans un liquide à forte tension superficielle et la succession des opérations est répétée un grand nombre de fois.

En effet, la différence relative de masse entre deux molécules du composé tensio-actif comprenant deux isotopes différents du métal lourd dont on veut réaliser la séparation isotopique est en général faible. Ceci est d'autant plus vrai qu'il s'agit d'un métal plus lourd. La concentration en isotope le plus léger, de la fraction de la solution récupérée, n'est donc que légèrement plus forte que la concentration de la solution de départ. Il est donc nécessaire de répéter le processus jusqu'à ce que l'on obtienne la concentration désirée.

De préférence, la fraction de la solution qui n'est pas récupérée est recyclée, la formation de surface de séparation et la récupération de la fraction de la solution voisine de la surface étant à nouveau effectuées.

On notera que la fraction de la solution qui n'est pas récupérée a une concentration en isotope le plus léger plus faible que la concentration de la solution de départ. On réalise donc la séparation isotopique en continu, la solution qui a été appauvrie étant à nouveau enrichie. Ce processus peut d'ailleurs être facilement automatisé.

Ledit composé tensio-actif est de préférence un oléate.

Bien entendu d'autres savons peuvent être utilisés, puisque ce sont des corps faciles à préparer industriellement et ne présentant aucun danger, ni pour l'homme ni pour le matériel qui ne risque donc pas d'être attaqué. On notera à cet égard que dans le cas de la séparation isotopique de l'uranium, l'oléate d'uranium est beaucoup plus facile à manipuler que le tétrafluorure d'uranium, actuellement utilisé dans le procédé de diffusion gazeuse.

On a d'autre part intérêt à réduire le poids moléculaire de l'acide gras utilisé pour la fabrication du savon, afin d'augmenter la différence relative entre les masses des molécules de deux isotopes différents.

De préférence, ledit gaz est de l'air.

Le liquide à forte tension superficielle peut être de l'eau, mais d'autres liquides conviennent, en particulier des hydrocarbures.

On décrira maintenant l'invention plus particulièrement appliquée à la séparation des isotopes 235 et 238 de l'uranium.

On forme, à partir d'un mélange d'uranium 235 et d'uranium 238, de l'oléate d'uranium.

On peut partir, par exemple, d'uranium naturel, contenant 0,7% d'uranium 235. Les molécules qui contiennent l'isotope 235 de l'uranium ont une masse proportionnelle à M+235, où M est le poids moléculaire de l'oléate, uranium exclu, alors que celles qui contiennent l'isotope 238 ont une masse proportionnelle à M+238.

On dissout ensuite cet oléate dans de l'eau, et on insuffle de l'air dans la solution pour produire des bulles.

On démontre que si $x_0$ est la distance initiale à la surface d'une bulle d'une molécule d'oléate d'uranium de masse $m$, le temps T mis par la molécule pour atteindre la surface est:

$$T = \frac{\pi-}{2} \cdot \sqrt{\frac{m}{2a}} \cdot x_0^{3/2}$$

où $a$ est une coefficient constant.

Les molécules d'isotope 235 arriveront donc relativement plus vite que celles de l'isotope 238 à la surface de la bulle, les temps de parcours pour une même distance initiale étant dans le rapport

$$\sqrt{\frac{M+235}{M+238}}$$

On déduit des résultats ci-dessus que si $\alpha_0$ est la concentration initiale en uranium 235 par rapport à l'uranium total, et $\alpha_1$ cette concentration dans la bulle de savon,

$$\alpha_1 = \frac{\sigma_0 \lambda}{1 + \alpha_0'(\lambda - 1)} \quad \text{avec} \quad \lambda = 3\sqrt{\frac{M+238}{M+235}}$$

soit à très peu près, si les conconcentrations restent faibles,

$$\alpha_1 = \alpha_0 \lambda.$$

Les bulles sont alors recueillies sous forme de mousse en surface et redissoutes dans de l'eau. Si l'opération est recommencée n fois, la concentration en uranium 235 dans la mousse par rapport à l'uranium total est alors

$$\alpha_n = \alpha_0 \cdot \left[ \frac{M+238}{M+235} \right]^{n/3}$$

dans le cas où les concentrations restent faibles. Si la concentration est forte, on a alors:

$$\alpha_n = \frac{\lambda \cdot \alpha_{n-1}}{1 + (\lambda - 1) \cdot \alpha_{n-1}}$$

On obtiendra ainsi, par exemple, dans le cas où l'acide gras ayant servi à la fabrication du savon est tel que M=200, et pour $\alpha_0$=0,00700:

$$\alpha_1=0,00702$$
$$\alpha_{100}=0,00880$$
$$\alpha_{200}=0,01107$$
$$\alpha_{300}=0,01392$$
$$\alpha_{500}=0,02200$$
$$\alpha_{1000}=0,06920$$
$$\alpha_{1500}=0,21750$$

On constate donc qu'après un assez grand nombre d'opérations, on peut obtenir de fortes concentrations en uranium 235.

La présente invention concerne également un dispositif pour la mise en oeuvre du procédé ci-dessus.

Selon l'invention, ce dispositif comprend un ensemble de cuves, des moyens pour insuffler un gaz dans ces cuves, des moyens pour recueillir une mousse formée à la surface de liquides contenus dans les cuves et pour la transférer dans une cuve située en aval de celle où elle était recueillie, et des moyens pour transférer une partie du liquide contenu dans chaque cuve dans une cuve située en amont de celle-ci.

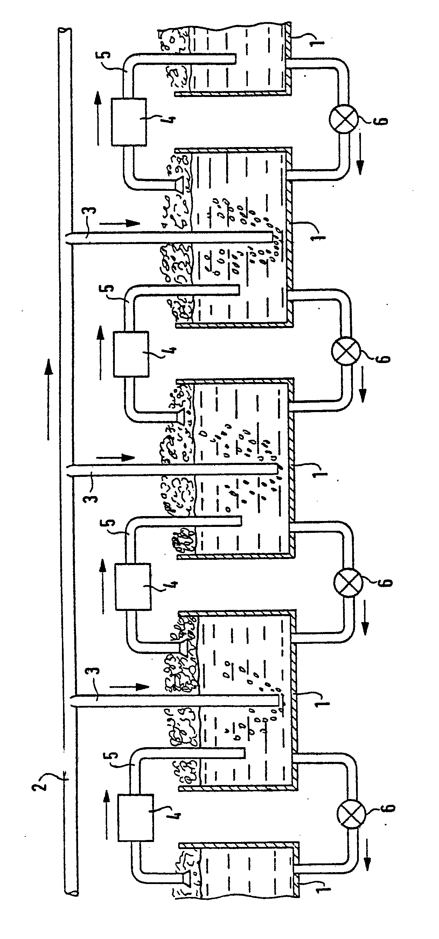

La figure 1 annexée montre à titre d'exemple non limitatif une forme de réalisation de ce dispositif.

Le dispositif comprend un ensemble de cuves 1 et un conduit 2 permettant d'amener de l'air sous pression. Des conduits 3, dérivés du conduit 2, insufflent cet air dans les cuves 1.

Si les cuves 1 contiennent de l'oléate d'uranium en solution dans de l'eau, l'air insufflé par les conduits 3 forme à la surface des cuves une mousse d'oléate d'uranium qui, comme il a été expliqué ci-dessus, est plus riche en uranium 235 par rapport à l'uranium 238 que la solution contenue dans la cuve.

Le dispositif comprend également des moyens 4 permettant de recueillir la mousse formée à la surface des cuves, et de redissoudre cette mousse dans une cuve située en aval. Ces moyens peuvent comprendre par exemple un râcloir pour ramasser la mousse, des moyens pour réduire cette mousse à l'état liquide, et un conduit 5 pour amener et dissoudre ce liquide dans la cuve située immédiatement en aval de celle où la mousse a été prélevée.

Enfin, le dispositif comprend des pompes 6 pour transférer la solution contenue dans chaque cuve dans une cuve située en amont de celle-ci.

Ainsi, l'uranium 235 se concentre dans les cuves situées en aval, tandis que les solutions contenues dans les cuves appauvries en uranium 235 après la formation de mousse sont transférées en amont.

De préférence, il est prévu des systèmes de régulation permettant de conserver la concentration en uranium 235 dans chaque cuve sensiblement constante.

Dans le cas où le corps non miscible employé est un solide pulvérulent, le processus est sensiblement différent. Il faut en effet, dans ce cas, extraire ce solide après l'avoir trempé dans la cuve, et le laver avec un solvant approprié, pour récupérer la fraction de la solution voisine des surfaces de séparation.

Comme il va de soi, l'invention n'est pas limitée aux formes de réalisation décrites ci-dessus à titre d'exemple, mais en embrasse au contraire toutes les variantes de réalisation.

**Revendications**

1. Procédé pour la séparation des isotopes d'un métal lourd, caractérisé en ce qu'il comprend la formation d'un composé tensio-actif dudit métal, la dissolution de ce composé dans un liquide à forte tension superficielle, l'injection d'un corps non miscible dans cette solution pour former une pluralité de surfaces de séparation, et la récupération de la fraction de la solution voisine desdites surfaces de séparation.

2. Procédé selon la revendication 1, caractérisé en ce qu'un gaz est insufflé dans la solution pour y produire des bulles et former ainsi des surfaces de séparation.

3. Procédé selon l'une quelconque des revendications 1 et 2, caractérisé en ce que ledit composé tensio-actif est un savon.

4. Procédé selon l'ensemble des revendications 2 et 3, caractérisé en ce que l'on recueille les bulles à la surface libre de la solution sous forme de mousse.

5. Procédé selon l'une quelconque des revendications 1 à 4, caractérisé en ce que la fraction de la solution récupérée est à nouveau dissoute dans un liquide à forte tension superficielle, et en ce que la succession des opérations est répétée un grand nombre de fois.

6. Procédé selon l'une quelconque des revendications 1 à 5, caractérisé en ce que la fraction de la solution qui n'est pas récupérée est recyclée, la formation de surfaces de séparation et la récupération de la fraction de la solution voisine de cette surface étant à nouveau effectuées.

7. Procédé selon l'une quelconque des revendications 1 à 6, caractérisé en ce que ledit composé tensio-actif est un oléate.

8. Procédé selon l'une quelconque des revendications 1 à 7, caractérisé en ce que ledit métal lourd dont on sépare les isotopes est de l'uranium.

9. Procédé selon la revendication 2, caractérisé en ce que ledit gaz est de l'air.

10. Dispositif pour la mise en oeuvre du procédé selon l'une quelconque des revendications 1 à 9, caractérisé en ce qu'il comprend un ensemble de cuves, des moyens pour insuffler un gaz dans ces cuves, des moyens pour recueillir un mousse formée à la surface de liquides contenus dans les cuves, et pour la transférer dans une cuve située en aval de celle où elle a été recueillie, et des moyens pour transférer une partie du liquide contenue dans chaque cuve dans une cuve située en amont de celle-ci.

## Claims

1. Process for the separation of isotopes from a heavy metal, characterized in that it comprises the formation of a tension-active compound of said metal, the solution of this compound in a liquid having a strong surface tension, the injection of a non-miscible body into this solution to form a plurality of separation surfaces, and the recovery of the fraction of the solution adjacent to said separation surfaces.

2. Process according to claim 1 characterized in that a gas is injected into the solution to produce bubbles therein and to form thus separation surfaces.

3. Process according to any one of claims 1 and 2 characterized in that said tension-active compound is a soap.

4. Process according to claims 2 and 3, characterized in that the bubbles are collected at the free surfaces of the solution in the form of a foam.

5. Process according to any one of claims 1 to 4 characterized in that the fraction of the recovered solution is again dissolved in a liquid having a strong surface tension, and in that the succession of operations is repeated many times.

6. Process according to any one of claims 1 to 5 characterized in that the fraction of the solution which is not recovered is recycled, the formation of separation surfaces and the recovery of the fraction of the solution adjacent to this surface being again repeated.

7. Process according to any one of claims 1 to 6 characterized in that said tension-active compound is an oleate.

8. Process according to any one of claims 1 to 7 characterized in that said heavy metal from which the isotopes are separated is uranium.

9. Process according to claim 2, characterized in that said gas is air.

10. Apparatus for carrying out the process according to any one of claims 1 to 9, characterized in that it comprises a plurality of vats, means for injecting a gas into these vats, means for collecting a foam formed at the surface of the liquids contained in the vats, and for transferring it into a vat situated downstream of the vat where it was collected, and means for transferring a portion of the liquid contained in each vat into a vat situated upstream of the latter.

## Patentansprüche

1. Verfahren zur Trennung von Isotopen von einem Schwermetall, gekennzeichnet durch die Bildung einer grenzflächenaktiven Verbindung des Metalls, das Lösen dieser Verbindung in einer Flüssigkeit mit hoher Grenzflächenspannung, das Einführen eines nichtmischbaren Stoffs in diese Lösung zur Ausbildung zahlreicher Trennflächen und die Gewinnung des Anteils der Lösung nahe den Trennflächen.

2. Verfahren nach Anspruch 1, dadurch gekennzeichnet, dass ein Gas in die Lösung zur Blasenbildung und so zur Ausbildung der Trennflächen gepresst wird.

3. Verfahren nach einem der Ansprüche 1 oder 2, dadurch gekennzeichnet, dass als grenzflächenaktive Verbindung eine Seife verwendet wird.

4. Verfahren nach den Ansprüchen 2 und 3, dadurch gekennzeichnet, dass die Blasen an der freien Oberfläche der Lösung in Form eines Schaums gesammelt werden.

5. Verfahren nach einem der Ansprüche 1 bis 4, dadurch gekennzeichnet, dass der gewonnene Anteil der Lösung erneut in einer Flüssigkeit mit hoher Granzflächenspannung gelöst und die Schrittfolge vielfach wiederholt wird.

6. Verfahren nach einem der Ansprüche 1 bis 5, dadurch gekennzeichnet, dass der Anteil der Lösung, der nicht gewonnen wird, rüchgeführt wird, womit die Bildung der Trennflächen und die Gewinnung des Anteils der Lösung nahe dieser Grenzfläche erneut erfolgt.

7. Verfahren nach einem der Ansprüche 1 bis 6, dadurch gekennzeichnet, dass als grenzflächenaktive Verbindung ein Oleat verwendet wird.

8. Verfahren nach einem der vorhergehenden Ansprüchen 1 bis 7, dadurch gekennzeichnet, dass als Metall, von dem man die Isotopen trennt, Uran eingesetzt wird.

9. Verfahren nach Anspruch 2, dadurch gekennzeichnet, dass als Gas Luft verwendet wird.

10. Vorrichtung zur Durchführung des Verfahrens gemäss einem der Ansprüche 1 bis 9, dadurch gekennzeichnet, dass sie eine Reihe von Behältern, Einrichtungen zum Einblasen eines Gases in diese Behälter, Einrichtungen zur Gewinnung eines an der Oberfläche der in den Behältern enthaltenen Flüssigkeiten gebildeten Schaums und zum Uberführen in einen Behälter hinter dem, wo er gesammelt wurde, sowie Einrichtungen zum Überführen eines Teils der in jedem Behälter enthaltenen Flüssigkeit in einen Behälter vor diesem aufweist.

0 006 865